# EUROPEAN PATENT SPECIFICATION

(11) **EP 3 217 716 B1**
(45) Date of publication and mention of the grant of the patent: **02.01.2019**
(21) Application number: 15858080.3
(22) Date of filing: 06.11.2015
(51) Int. Cl.: H04L 29/06, H04L 29/08, H04W 28/02, H04L 12/801, H04W 28/06, H04W 36/00

(54) **USER APPARATUS, AND DUPLICATED PACKET PROCESSING METHOD**
BENUTZERVORRICHTUNG UND VERARBEITUNGSVERFAHREN FÜR DUPLIZIERTES PAKET
APPAREIL UTILISATEUR ET PROCÉDÉ DE TRAITEMENT DE PAQUETS EN DOUBLE

(30) Priority: 07.11.2014 JP 2014227553
(43) Date of publication of application: 13.09.2017
(73) Proprietor: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); HAPSARI, Wuri Andarmawanti, Tokyo 100-6150 (JP)
(74) Representative: Hoffmann Eitle
(86) International application number: PCT/JP2015/081361
(87) International publication number: WO 2016/072501

(56) References cited:
- HUAWEI ET AL: "Discarding PDCP PDU in the reception of split bearer", 3GPP DRAFT; R2-144125, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Shanghai, China; 20141006 - 20141010 27 September 2014 (2014-09-27), XP050870483, Retrieved from the Internet: URL:http://www.3gpp.org/ftp/tsg_ran/WG2_RL 2/TSGR2_87bis/Docs/ [retrieved on 2014-09-27]
- LG ELECTRONICS INC: "Handling of Duplicated PDCP PDU in Split Bearer", 3GPP DRAFT; R2-144352 HANDLING OF DUPLICATED PDCP PDU IN SPLIT BEARER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Shanghai, China; 20141006 - 20141010 26 September 2014 (2014-09-26), XP050870281, Retrieved from the Internet: URL:http://www.3gpp.org/ftp/tsg_ran/WG2_RL 2/TSGR2_87bis/Docs/ [retrieved on 2014-09-26]
- HUAWEI: 'HiSilicon, Discarding PDCP PDU in the reception of split bearer' 3GPP TSG-RAN WG2#87BIS R2-144125 27 September 2014, XP050870483 Retrieved from the Internet: <URL:http://www.3gpp.org/ftp/tsg_ran/WG2_RL 2/TSGR2_87bis/Docs/R2-144125.zip>
- LG ELECTRONICS INC.: 'Handling of Duplicated PDCP PDU in Split Bearer' 3GPP TSG-RAN WG2#87BIS R2-144352 26 September 2014, XP050870281 Retrieved from the Internet: <URL:http://www.3gpp.org/ftp/tsg_ran/WG2_RL 2/TSGR2_87bis/Docs/R2-144352.zip>

## Description

### TECHNICAL FIELD

The present invention relates to a mobile communication system configured such that a user apparatus communicates with a plurality of base stations.

### BACKGROUND ART

In the LTE system, carrier aggregation (CA : Carrier Aggregation) for performing communication by simultaneously using a plurality of carriers is adopted, in which predetermined bandwidths (20 MHz at the maximum) are used as basic units. In carrier aggregation, a carrier which is a basic unit is called a component carrier (CC).

When CA is performed, a PCell (Primary cell) that is a reliable cell for ensuring connectivity and an SCell (Secondary cell) that is an appendant cell are set for the user apparatus UE. The user apparatus UE connects to a PCell first, and then, an SCell can be added as necessary. The PCell is a cell similar to an independent cell for supporting RLM (Radio Link Monitoring) and SPS (Semi-Persistent Scheduling) and the like.

The SCell is a cell which is set in the user apparatus UE by being added to the PCell. Addition and deletion of the SCell is performed by RRC (Radio Resource Control) signaling. Since an SCell is in a deactivated state right after it is set in the user apparatus UE, communication becomes available (scheduling becomes available) only by activating it.

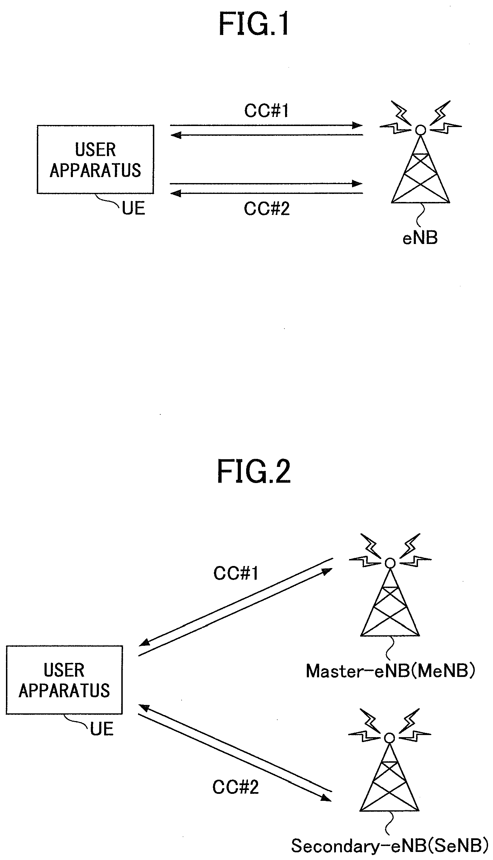

As shown in Fig. 1, in CA up to Rel-10 of LTE, a plurality of CCs under the same base station eNB are used.

On the other hand, in Rel-12, this is expanded so that Dual connectivity is proposed in which simultaneous communication is performed by using CCs under different base stations eNB to realize high throughputs (non-patent document 1). That is, in Dual connectivity, the UE performs communication simultaneously using radio resources of two physically different base stations eNB.

Dual connectivity is a kind of CA, and it is also referred to as Inter eNB CA (inter base station carrier aggregation), in which Master-eNB(MeNB) and Secondary-eNB(SeNB) are introduced. Fig. 2 shows an example of Dual connectivity. In the example of Fig. 2, the MeNB communicates with a user apparatus UE by CC#1, and the SeNB communicates with the user apparatus UE by CC#2, so that Dual connectivity (DC, hereinafter) is realized.

In DC, a cell group formed by cell(s) (one or a plurality of cells) under an MeNB is called MCG (Master Cell Group), and a cell group formed by cell(s) (one or a plurality of cells) under an SeNB is called SCG (Secondary Cell Group). An UL CC is set in at least one SCell in an SCG, and PUCCH is set in one of the SCells. The SCell is called PSCell (primary SCell).

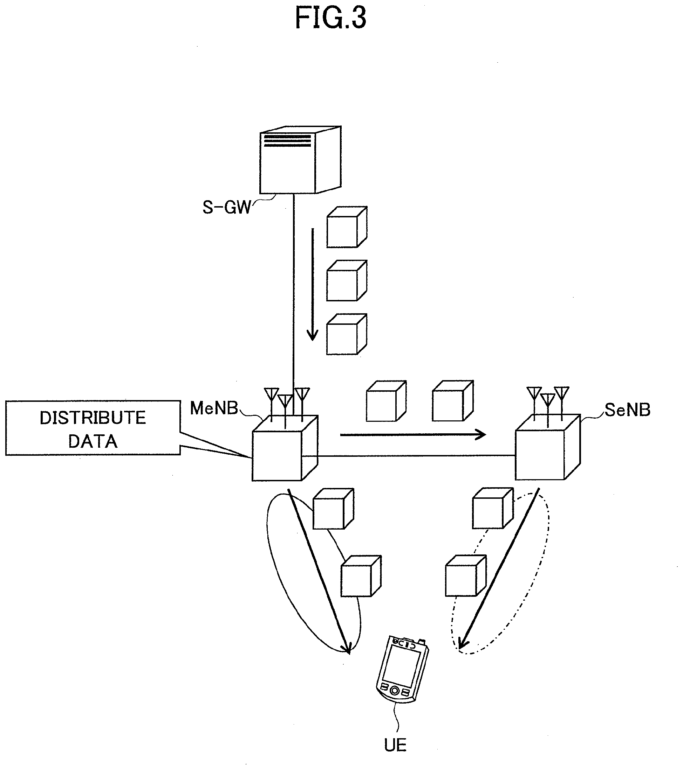

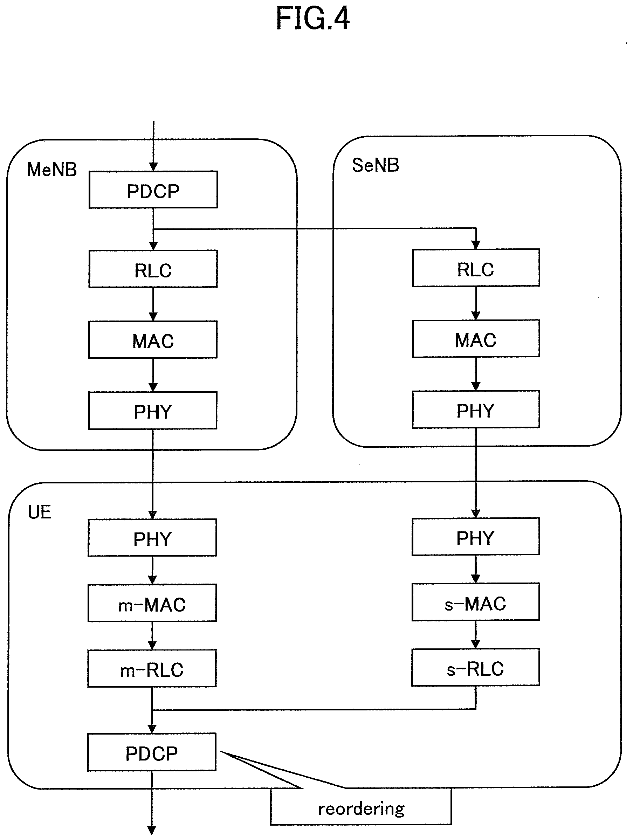

As a communication form in the DC, there is split bearer for distributing a bearer (communication route) into a plurality of eNBs. In a case where a base station MeNB is utilized as an anchor node for distributing a bearer, as shown in Fig. 3, the base station MeNB distributes downlink packets received from an S-GW (Serving Gateway) into packets to be transmitted to the user apparatus UE via an MCG and packets to be transmitted to the user apparatus via an SCG (base station SeNB). In the case where split bearer is set in which the base station MeNB is used as an anchor node, as shown in Fig. 4, the user apparatus UE includes a physical layer (PHY), a MAC (Medium Access Control) layer (m-MAC), and an RLC (Radio Link Control) layer (m-RLC) for the base station MeNB, and a PHY layer, an s-MAC layer, and an s-RLC layer for the base station SeNB, and a PDCP layer connected to the m-RLC layer and the s-RLC layer.

By the way, in the LTE system, normally, transmission in which order is maintained (in-sequence delivery) is secured in the RLC layer. However, in a case where in-sequence delivery cannot be secured in the RLC layer (in the case of handover (HO), reconnection, and the like), duplication detection and reordering processing are performed in the PDCP layer. Also, in the case of split bearer, basic processing is similar. Fig. 4 shows, as an example, reordering processing in the PDCP layer.

Outline of operation of the PDCP layer is described. In the transmission side, a PDCP entity performs ciphering processing, tampering detection, and header compression for a packet received from an upper layer, that is, for a PDCP SDU (Service Data Unit), and adds a PDCP SN to the header to transmit a PDCP PDU (Packet Data Unit) to the RLC layer. On the other hand, in the reception side (assuming RLC-AM as an example), a reception window (window) is managed, and when a PDCP SN of a packet received from the transmission side falls within the reception window, deciphering processing (ciphering releasing processing) is performed for a payload (PDCP SDU) of the received packet based on a COUNT value formed by an estimated HFN and a PDCP SN of the header. After that, the PDCP entity transmits the processed packet to an upper layer and updates the reception window.

When performing reordering, the PDCP entity uses a reordering timer. When detecting missing, the user apparatus UE starts the reordering timer, suspends processing for following PDCP PDUs while the timer is running, and, when the missing packet is not received until expiration of the timer, the user apparatus UE gives up reception of the packet so as to restart the processing.
Non patent document HUAWEI ET AL: "Discarding PDCP PDU in the reception of split bearer", R2-144125 discusses the issues of whether out-of-ordered received PDCP PDU should be discarded silently or discarded after being processed; and whether duplicate PDU falling in the re-ordering window should replace the older one.
Non patent document LG ELECTRONICS INC: "Handling of Duplicated PDCP PDU in Split Bearer", R2-144352 discusses the issue of whether the duplicated PDU is processed or not before being discarded.

### RELATED ART DOCUMENT

### [NON PATENT DOCUMENT]

[NON PATENT DOCUMENT 1] 3GPP TR 36.842 V12.0.0(2013-12)
[NON PATENT DOCUMENT 2] 3GPP TS 36.323 V12.1.0(2014-09)
[NON PATENT DOCUMENT 3] 3GPP TSG-RAN WG2 #87,R2-143417

### SUMMARY OF THE INVENTION

### PROBLEM TO BE SOLVED BY THE INVENTION

Next, duplication detection in the PDCP layer is described. A duplicated part is simply discarded in duplication detection in the RLC layer. On the other hand, in the PDCP layer, a duplicated packet is once processed, and, after that, discarding is performed (non-patent document 2).

The above-mentioned "process" is deciphering of a packet, and ROHC (RObust Header Compression) decompression processing (decompression). Before describing the reason for once processing the duplicated packet, outline of ROHC is described.

ROHC is a header compression technique used in the PDCP layer of LTE, which enables decreasing the number of bits actually transmitted by radio by transmitting only a part where there is a change between packets in the RTP/UDP/IP header field.

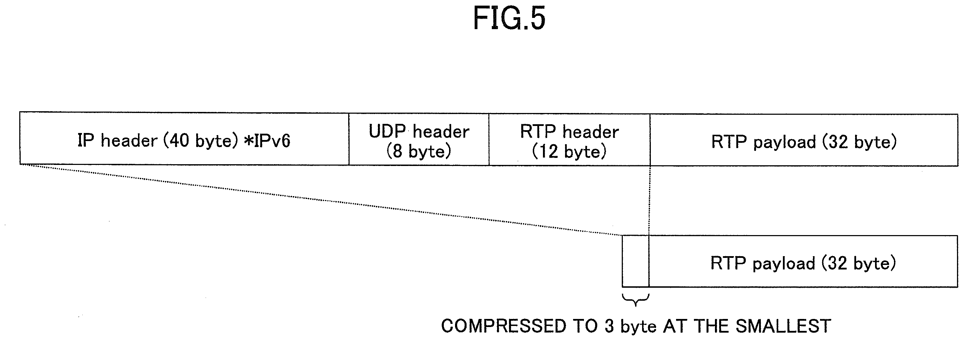

For example, as a field (Static part) that does not change, there are SSRC (identifier of RTP layer), IP address and the like. As a field (dynamic part) that changes, there are RTP timestamp, RTP-Sequence Number, UDP checksum and the like. As shown in Fig. 5, by compressing fields that do not change almost, the number of bits of the header can be largely decreased.

An apparatus that executes header compression/restoration by ROHC stores a context of each RTP session (packet stream), and compresses/restores a header of a packet based on the context. Information included in the context is, for example, information of the Static part. The context is identified by a context ID (CID).

In a case where ROHC is performed, the side in which header compression is performed (example: a base station eNB in the downlink) is called a compressor, and the side (example: user apparatus UE in the downlink) in which a compressed header is restored is called a decompressor.

In the ROHC, in order to enable the compression/restoration, first, initialization/refresh processing is performed in which all pieces of information of uncompressed header are transmitted from the compressor to the decompressor. A ROHC packet transmitted in this state is called an IR packet. The initialization/refresh processing is performed by the IR packet, and after a context is established, the state is changed to a state in which compression/restoration is performed.

Also, in ROHC, other than the IR packet, an IR-DYN packet, a packet type 0, a packet type 1, a packet type 2 and the like are defined, so that updates of a part of the context and profiles and the like can be performed. Pieces of information necessary for performing header compression/restoration processing such as context, context ID, profile in ROHC and the like are collectively called ROHC information.

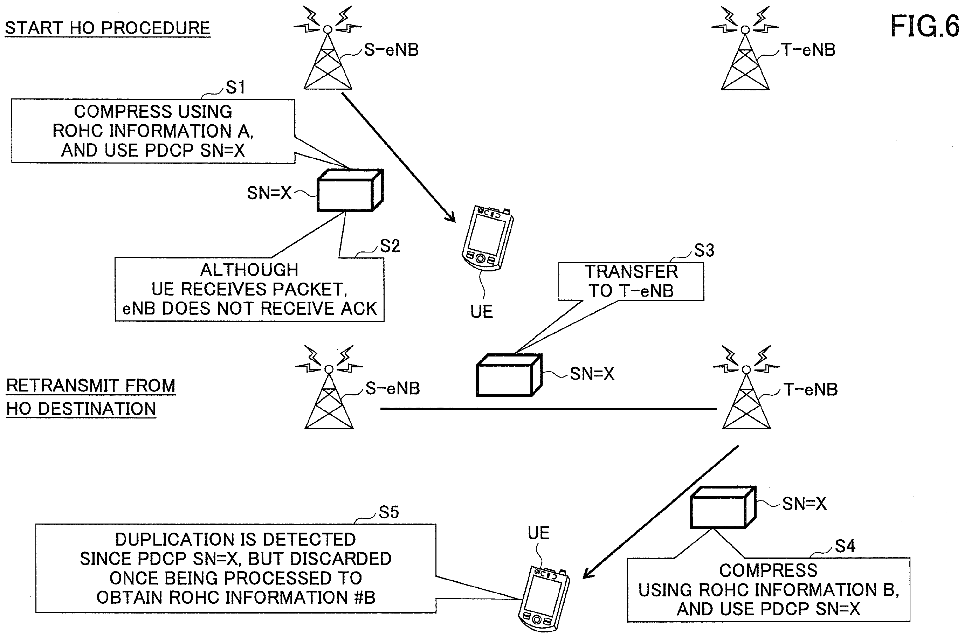

The reason for once processing the duplicated packet in the PDCP layer is that, even for a same PDCP SDU, ROHC information associated with the PDCP SDU is different between before and after HO. That is, communication with an eNB after HO, ROHC information that is established with the eNB after HO should be used, so, in order to obtain the ROHC information, the duplicated packet is once processed. This is described with reference to an example of Fig. 6.

Fig. 6 shows an example in a case where HO is performed from an S-eNB (Source-eNB) to a T-eNB (Target-eNB). In a state where a HO procedure is launched, the S-eNB transmits, to the user apparatus UE, a packet (PDCP PDU) of SN=X in which compression is performed using ROHC information A (step 1). Although the user apparatus UE receives the packet, the S-eNB does not receive an ACK since HO is being performed (step 2). The S-eNB transfers information of the packet for which ACK is not received to the T-eNB (step 3).

The T-eNB performs compression on the information using ROHC information B and transmits a packet to which SN=X is attached to the user apparatus UE (step 4). The user apparatus UE receives the packet of SN=X from the T-eNB. But, since the user apparatus UE has already received a packet of SN=X from the S-eNB, the user apparatus UE determines that the packet of SN=X received from the T-eNB is a duplicated packet. However, if the packet of SN=X received from the T-eNB is discarded as it is, it is not possible to obtain ROHC information (initialization information, update information and the like) used for header compression/restoration between the user apparatus and the T-eNB, so that there is a possibility in that a delay may occur until a context for header compression/restoration is established between the user apparatus UE and the T-eNB. Therefore, the duplicated packet is not discarded as it is, but it is discarded after once processing (deciphering, ROHC decompression processing) the duplicated packet (step 5). In the ROHC decompression processing, updating processing for ROHC information is included, so that ROHC information B is obtained by this processing.

By the way, during HO and reconnection, PDCP re-establishment (PDCP re-setting) is performed in the PDCP entity ("5.2 Re-establishment procedure" of non-patent document 2). That is, the above-mentioned duplication detection processing is performed when PDCP re-establishment is performed.

However, in the case where split bearer is configured, duplication detection may occur even if PDCP re-establishment is not performed. For example, this case corresponds to a case in which, although a missing packet (PDCP PDU) cannot be received before expiration of a reordering timer, the missing packet is received after that.

In this case, there is a problem in that, if the user apparatus UE performs ROHC processing=>discarding in the PDCP layer in a conventional manner, past ROHC information (information held by PDCP PDU that arrives after expiration of the reordering timer) is obtained, thus, there is a problem in that, updating of ROHC information is performed by erroneous information, so proper decompression processing cannot be performed properly after that.

The present invention is contrived in view of the above-mentioned point, and an object is to provide a technique that enables properly performing processing of a duplicated packet, when a user apparatus receives the duplicated packet, in consideration of packet decompression processing after that, in a mobile communication system in which packets of a bearer are distributed among a plurality of base stations, and the distributed packets of the bearer are transmitted to the user apparatus from the plurality of base stations.

### MEANS FOR SOLVING THE PROBLEM

According to an embodiment of the present invention, there is provided a user apparatus as described by claim 1. Further preferential embodiments of the present invention are described in connection with the dependent claims.

Also, according to an embodiment of the present invention, there is provided a duplicated packet processing method as described in connection with the claim set.

### EFFECT OF THE PRESENT INVENTION

According to an embodiment of the present invention, there is provided a technique that enables properly performing processing of a duplicated packet, when a user apparatus receives the duplicated packet, in consideration of packet decompression processing after that, in a mobile communication system in which packets of a bearer are distributed among a plurality of base stations, and the distributed packets of the bearer are transmitted to the user apparatus from the plurality of base stations.

### BRIEF DESCRIPTION OF THE DRAWINGS

Fig. 1 is a diagram showing CA up to Rel-10;
Fig. 2 is a diagram showing an example of Dual connectivity;
Fig. 3 is a diagram for explaining split bearer in which a base station MeNB is used as an anchor node;
Fig. 4 is a diagram for explaining a protocol configuration in split bearer;
Fig. 5 is a diagram for explaining ROHC;
Fig. 6 is a diagram for explaining a process example in handover;
Fig. 7 is a block diagram of a communication system in an embodiment of the present invention;
Fig. 8 is a diagram showing an example of a flow of packets;
Fig. 9 is a diagram for explaining an example of processing when detecting duplication;
Fig. 10 is a diagram for explaining an example of a case where PDCP re-establishment is executed;
Fig. 11 is a diagram showing a procedure example of configuration change;
Fig. 12 is a diagram showing a procedure example of SeNB change (handover);
Fig. 13 is a block diagram of a user apparatus UE;
Fig. 14 is a flowchart showing an operation example of the user apparatus UE;
Fig. 15 is a HW block diagram of the user apparatus UE;
Fig. 16 is a HW block diagram of a base station eNB.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below. For example, in the following, ROHC is used as a header compression protocol. However, this is an example, and other header compression protocols may be used. Although the present embodiment is targeted for a mobile communication system of LTE, the present invention can be applied not only to LTE but also to other mobile communication systems. Also, in the specification and the claims, the term "LTE" is used to mean Rel-12 of 3GPP, or schemes after Rel-12 unless otherwise stated.

### (System whole configuration)

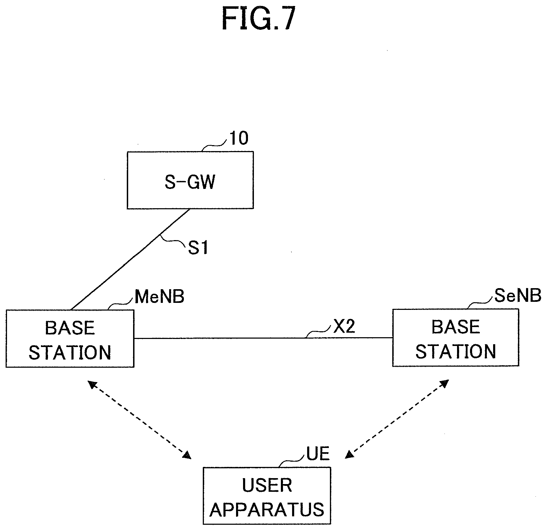

Fig. 7 is a diagram showing a configuration example of a communication system in an embodiment of the present invention. As shown in Fig. 7, the communication system includes a base station MeNB that communicates with an S-GW10 by an S1 interface, and a base station SeNB, which enable performing DC with a user apparatus UE. Communication is available between the base station MeNB and the base station SeNB by an X2 interface, and packets of a bearer are (distributed) split at the base station MeNB so that split bearer is realized. In the following, for simplifying description, the base station MeNB and the base station SeNB are described as MeNB and SeNB respectively.

In the communication system shown in Fig. 7, for example, a PCell and an SCell (including PSCell) can be set in which MCG is a macro cell and an SCG is a small cell. SCG addition, split bearer setting, SCG change, intra-MeNB HO and the like at the user apparatus UE are performed by an RRC signaling from the MeNB. But, it is not limited to this.

### (Operation example 1)

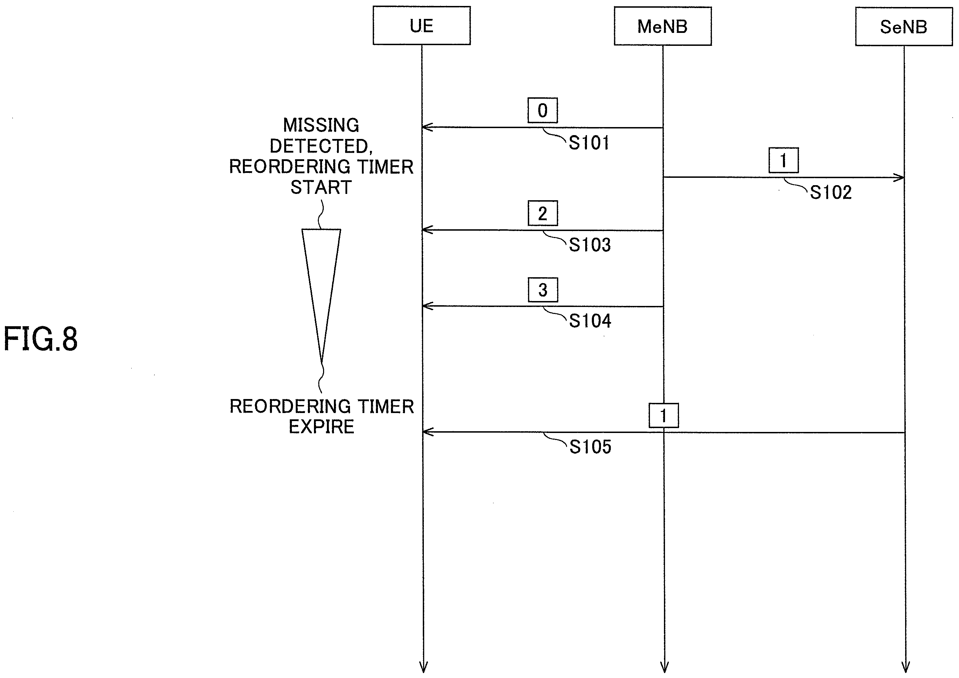

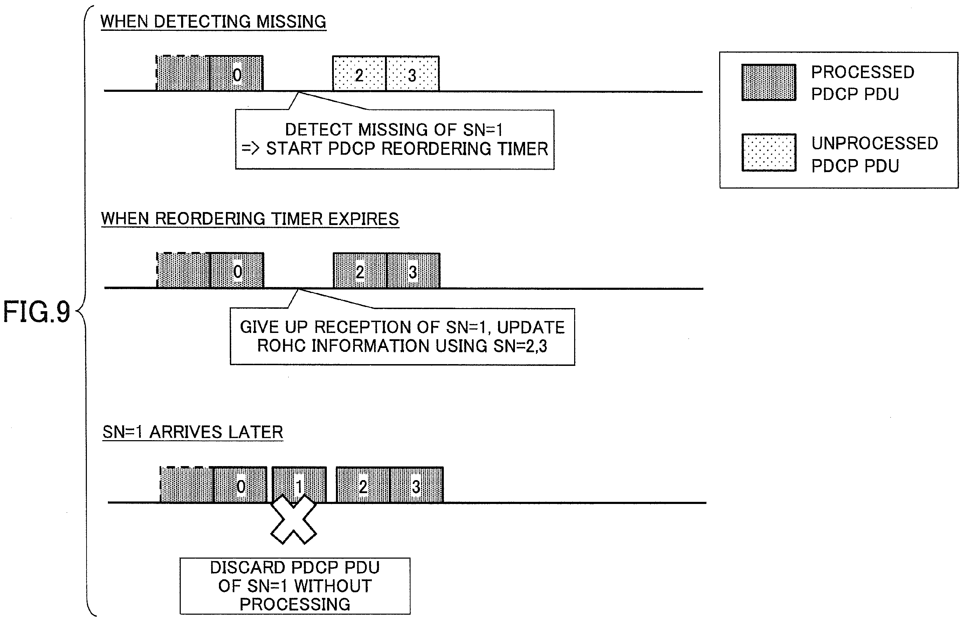

With reference to Fig. 8 and Fig. 9, operation example 1 of the present embodiment is described. In the example shown in Fig. 8, DC by the MeNB and the SeNB is set (configured) in the user apparatus UE, and split bearer using a path from the MeNB to the user apparatus UE and a path from the SeNB to the user apparatus UE is configured in the user apparatus UE.

In step 101 of Fig. 8, a packet (PDCP PDU, same applies hereinafter) of SN=0 is transmitted from the MeNB to the user apparatus UE. In step 102, a packet of SN=1 is transferred from the MeNB to the SeNB. However, for some reasons (example: radio quality deterioration between SeNB and UE), delay occurs in scheduling for transmitting the packet of SN=1 to the user apparatus UE, so that the packet of SN=1 is not transmitted to the user apparatus UE soon.

Before the packet of SN=1 is transmitted from the SeNB to the user apparatus UE, a packet of SN=2 is transmitted from the MeNB to the user apparatus UE (step 103). After receiving the packet of SN=0 and before receiving the packet of SN=1, the user apparatus UE detects missing of the packet of SN=1 by receiving the packet of SN=2 to start a reordering timer.

In the example of Fig. 8, the user apparatus UE receives a packet of SN=3 from the MeNB before the reordering timer expires (step 104), but the user apparatus UE does not receive the packet of SN=1.

The user apparatus UE gives up reception of the packet of SN=1 due to the expiration of the reordering timer to restart processing of a packet which was suspended. Here, deciphering processing and ROHC decompression processing are performed for the packet of SN=2 and the packet of SN=3. By the way, giving up reception of the packet of SN=1 may be rephrased as restarting suspended processing by regarding that the packet of SN=1 is received.

In the example of Fig. 8, the packet of SN=1 is transmitted from the SeNB to the user apparatus UE after expiration of the reordering timer, so that the user apparatus UE receives this packet (step 105). The user apparatus UE does not receive the packet of SN=1 before step 105. However, since the user apparatus UE proceeds processing by regarding that the packet of SN=1 is received due to expiration of the reordering timer, the user apparatus UE determines the packet of SN=1 received from the SeNB in step 105 to be a duplicated packet (PDCP PDU) for an already received packet.

Then, in the operation example 1, different from the case described with reference to Fig. 6, the duplicated packet is discarded without performing processing (deciphering, ROHC decompression processing) on the duplicated packet.

That is, in the split bearer, when detecting duplication of a packet, the packet is discarded without processing the packet. The reason for performing such processing is that, in normal cases in which HO or reconnection is not performed, ROHC information included in a duplicated packet is already obtained or old unnecessary information.

In the case of Fig. 8, if the duplicated packet is discarded after once processing it in the same way as the case of HO or reconnection, there is a possibility that update is performed by old ROHC information, and, as a result, decompression processing cannot be performed properly so that there is a possibility in that delay may occur until a context is established for performing decompression processing properly. On the other hand, in the operation example 1, such a problem does not occur.

Fig. 9 shows a diagram showing the example of Fig. 8 by focusing on received packets at the user apparatus UE. As shown in Fig. 9, the user apparatus UE starts the reordering timer at the time when missing of the packet of SN=1 is detected. Since the timer expires without receiving the packet of SN=1, the user apparatus UE gives up reception of the packet of SN=1 to update the ROHC information by processing packets of SN=2 and 3. After the timer expires, when the packet of SN=1 arrives later, the user apparatus UE discards the packet without processing the packet. Accordingly, ROHC processing can be continued by using the newest ROHC information.

### (Operation example 2)

In the present embodiment, even when split bearer is configured, when PDCP re-establishment (due to HO, reconnection and the like) is performed, a duplicated packet that is detected after the procedure of the HO and the like is discarded after once processing the duplicated packet. The reason is that, since reset of the header compression protocol (ROHC) is performed when PDCP re-establishment is performed, it can be considered that a duplicated packet received later (a packet having an SN the same as an SN that is already received) has new ROHC information.

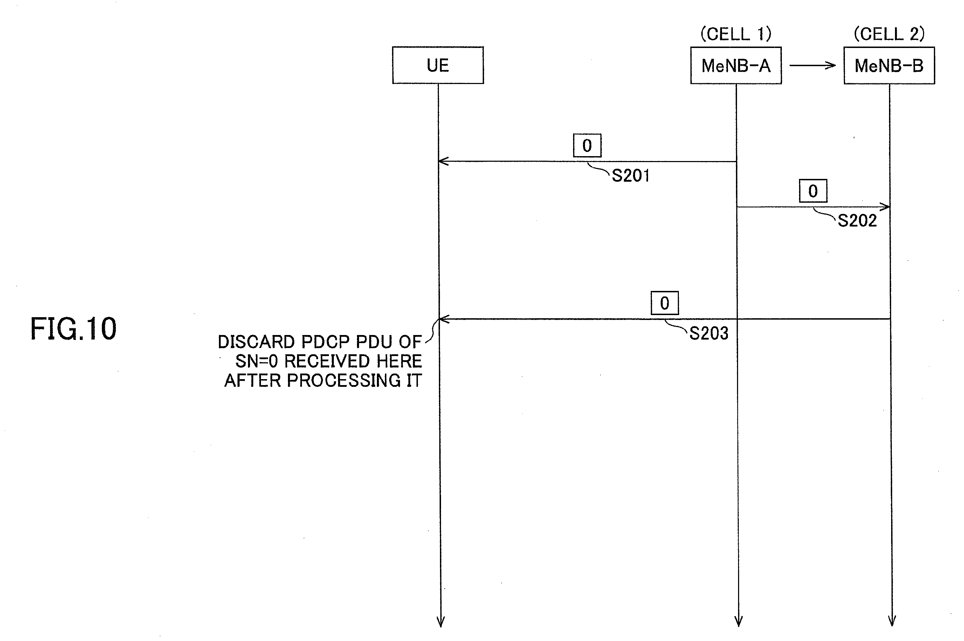

An operation example 2 is described with reference to Fig. 10, which is an operation example in a case where split bearer is configured and PDCP re-establishment is performed. Fig. 10 shows an example in a case where PDCP re-establishment is performed due to HO of MeNB. Fig. 10 shows transition from a cell 1 of an MeNB-A to a cell 2 of an MeNB-B. Although split bearer is configured also in the example of Fig. 10, SeNB is not shown in the figure.

In the example of Fig. 10, the MeNB-A starts an HO procedure and transmits a packet of SN=0 to the user apparatus UE. Since ACK is not returned to the MeNB-A from the user apparatus UE, information of the packet is transferred from the MeNB-A to the MeNB-B (step 202), the packet of SN=0 is transmitted from the MeNB-B to the user apparatus UE after the HO procedure (step 203), so that the user apparatus UE receives the packet.

Since the SN of the packet received in step 203 is 0, the user apparatus UE detects that the packet is a duplicated packet for the packet received in step 201, so that the user apparatus UE discards the packet after once performing processing (deciphering, ROHC decompression processing).

In Fig. 10, handover between different MeNBs is shown as an example in a case where split bearer is configured and PDCP re-establishment is performed. However, the case where split bearer is configured and PDCP re-establishment is performed is not limited to handover between different MeNBs. For example, PDCP re-establishment can be performed in general configuration changes such as SeNB HO, SeNB addition, intra-MeNB HO (sector change and the like), reconnection, and the like.

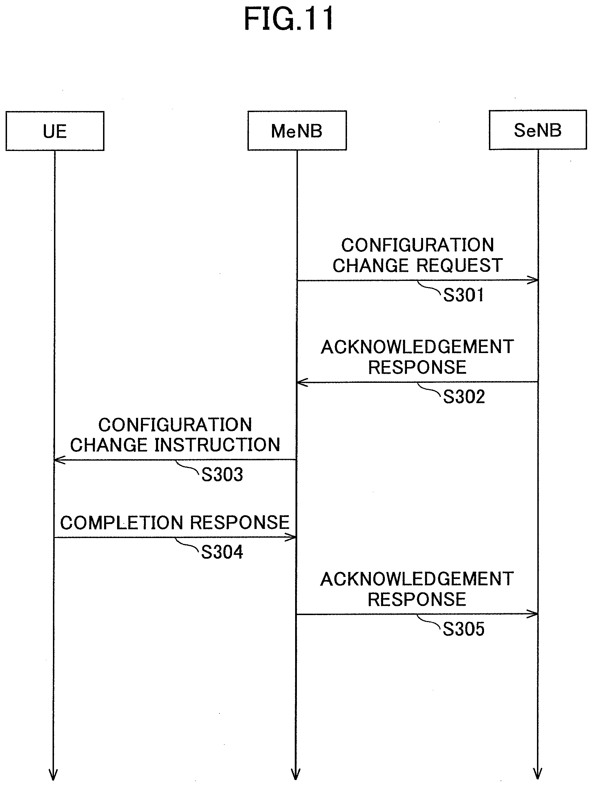

Fig. 11 is a diagram showing an outline example of a configuration change procedure. Fig. 11 shows a part of the signaling flow. By the way, an example of a signaling flow in DC related to Fig. 11 is described in the non-patent document 3.

In Fig. 11, for example, when the MeNB determines to perform configuration change (example: SeNB addition), the MeNB transmits a configuration change request to the SeNB (step 301). The SeNB that receives the configuration change request transmits an acknowledgement response to the MeNB (step 302). The acknowledgement response includes, for example, an SCG configuration that the SeNB desires to set in the user apparatus UE in the configuration change.

The MeNB transmits, to the user apparatus UE, a configuration change instruction (example: RRC connection reconfiguration) including an MCG configuration and the SCG configuration, for example (step 303).

After setting of the configuration change completes, the user apparatus UE returns a completion response (example: RRC connection reconfiguration complete) to the MeNB (step 304). The MeNB that receives the completion response from the user apparatus UE transmits an acknowledgement response to the SeNB (step 305).

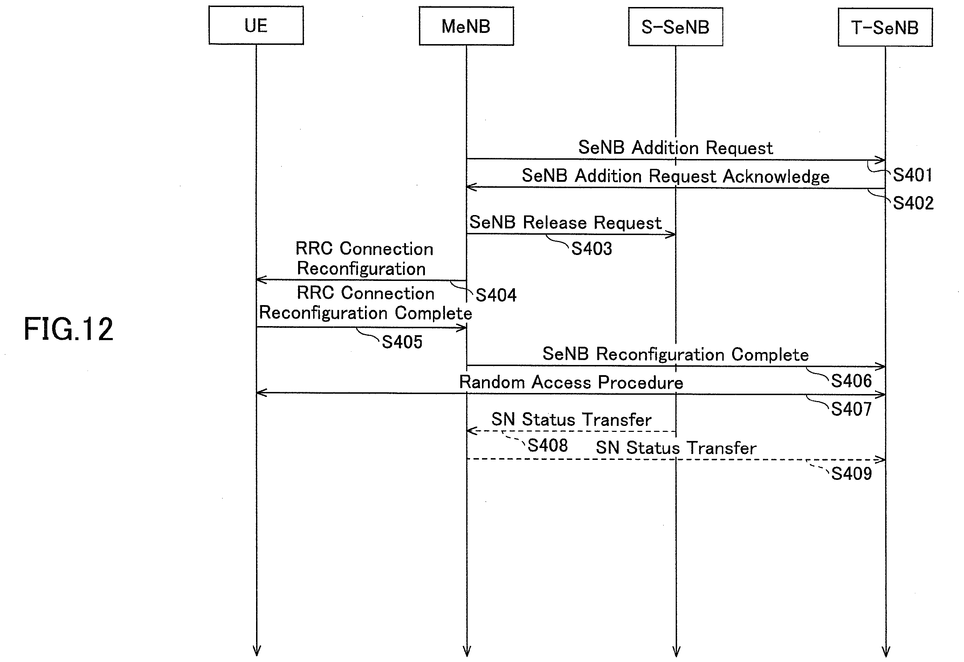

As a more concrete example of the configuration change, an example of SeNB change (handover from S-SeNB to T-SeNB) is shown in Fig. 12 (details are shown in non-patent document 3). Fig. 12 shows a part of the signaling flow. Also, the flow shown in Fig. 12 is an example.

As shown in Fig. 12, the MeNB transmits an SeNB Addition Request to the T-SeNB (Target-SeNB) (step 401), and the T-SeNB transmits an SeNB Addition Request Acknowledge to the MeNB (step 402). The MeNB transmits an SeNB Release Request to the S-SeNB (Source-SeNB) (step 403), and transmits an RRC connection reconfiguration to the user apparatus UE (step 404). The user apparatus UE transmits an RRC connection reconfiguration complete to the MeNB (step 405), and the MeNB transmits an SeNB reconfiguration complete to the T-SeNB (step 406). Also, a random access procedure is performed between the user apparatus UE and the T-SeNB (step 407), so that it becomes possible that the user apparatus UE communicates with the T-SeNB.

Further, SN Status Transfer (transfer of data) is performed from the S-SeNB to the MeNB (step 408), and transfer of the data is performed from the MeNB to the T-SeNB (step 409).

In the configuration change such as one shown in Fig. 11 and Fig. 12, for example, the user apparatus UE may determine to perform PDCP re-establishment based on reception of a configuration change instruction (RRC connection reconfiguration) as a trigger, or the user apparatus UE may determine to perform PDCP re-establishment based on transmission of a completion response (RRC connection reconfiguration complete) as a trigger, or the user apparatus UE may determine to perform PDCP re-establishment based on other triggers.

Also, when performing configuration change by the above-mentioned signaling sequence, or irrespective of presence or absence of the signaling sequence of the configuration change, PDCP re-establishment may be explicitly instructed from the MeNB to the user apparatus UE, so that the user apparatus UE may perform PDCP re-establishment based on reception of the instruction as a trigger.

### (Apparatus configuration, process flow)

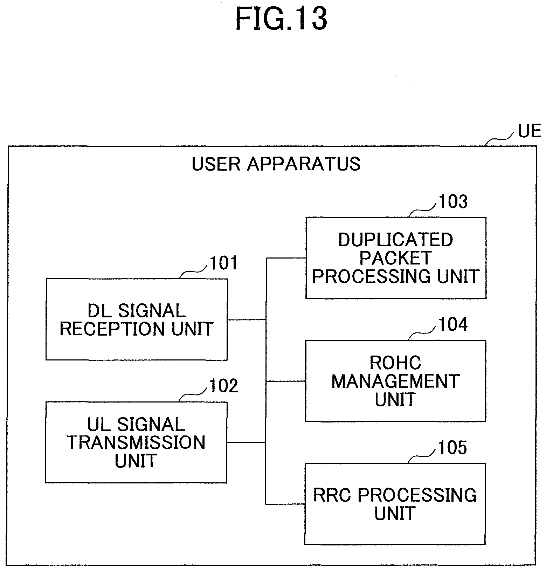

Fig. 13 shows a functional configuration diagram of the user apparatus UE of the present embodiment. As shown in Fig. 13, the user apparatus UE includes a DL signal reception unit 101, an UL signal transmission unit 102, a duplicated packet processing unit 103, a ROHC management unit 104, an RRC (radio resource control) processing unit 105. Fig. 13 only shows functional units especially related to the embodiment of the present invention in the user apparatus UE, and the user apparatus UE also includes at least functions, not shown in the figure, for performing operation complying with LTE. Also, the configuration shown in Fig. 13 is merely an example, and, any functional segmentations and any names of functional units can be used as long as the user apparatus UE can execute processing described in the present embodiment.

The DL signal reception unit 101 includes functions configured to receive various signals from each eNB by radio and obtain a signal of an upper layer from the received physical layer signals. The UL signal transmission unit 102 includes functions configured to generate various signals of physical layer from an upper layer signal to be transmitted from the user apparatus UE, and transmit the signals by radio.

The duplicated packet processing unit 103 performs processing on the duplicated packet described as the operation example 1 and the operation example 2 in the present embodiment. That is, the duplicated packet processing unit 103 performs detection of a duplicated packet, determination of presence or absence of execution of PDCP re-establishment, and determination of a processing method for the duplicated packet (discarding after once processing, or, discarding without processing).

It is assumed that each of the DL signal reception unit 101 and the UL signal transmission unit 102 includes a packet buffer, and performs processing of layer 1 (PHY) and layer 2 (MAC, RLC, PDCP) (however, not limited to this). That is, the DL signal reception unit 101 includes functions configured, when detecting missing in packets of a bearer that are received sequentially from a plurality of base stations, to start a reordering timer and suspend processing of the packet to wait for reception of the missing packet until expiration of the timer, to give up reception of the packet when the timer expires without receiving the missing packet, and to restart processing of packets.

In a case where the DL signal reception unit 101 and the UL signal transmission unit 102 perform processing of layer 1 (PHY) and layer 2 (MAC, RLC, PDCP), for example, the duplicated packet processing unit 103 performs the above-mentioned judgement/determination, so that the DL signal reception unit 101 performs deciphering, ROHC decompression processing, discarding of the packet (PDCP PDU) based on the result of judgement and the like. Also, the duplicated packet processing unit 103 may perform deciphering, ROHC decompression processing, discarding of the packet (PDCP PDU) in addition to the above-mentioned judgement/determination.

The ROHC management unit 104 stores information, such as context of ROHC, necessary for performing header compression/decompression by ROHC, and the information is referred to from an ROHC processing functional unit in the DL signal reception unit 101/UL signal transmission unit 102. Also, the ROHC management unit 104 may include a header compression/restoring function by ROHC in addition to storing the information.

The RRC processing unit 105 performs processing such as setting/change/management of DC and split bearer, and configuration change and the like. Also, the RRC processing unit 103 includes a function configured to manage (store) states on RRC in the user apparatus UE. For example, the duplicated packet processing unit 103 can ascertain whether the user apparatus UE is in a state where PDCP re-establishment is being performed (example: HO processing is being executed, or right after HO procedure is performed, or the like) by referring to the RRC processing unit 105. By the way, this is merely an example. The duplicated packet processing unit 103 may determine whether PDCP re-establishment is being executed by other methods. For example, the duplicated packet processing unit 103 may determine that PDCP re-establishment is being executed when detecting a flow of packets based on PDCP re-establishment by referring to the PDCP entity in the DL signal reception unit 101. Also, the duplicated packet processing unit 103 may determine that PDCP re-establishment is being executed by detecting whether processing, such as reset of ROHC, associated with PDCP re-establishment is being performed.

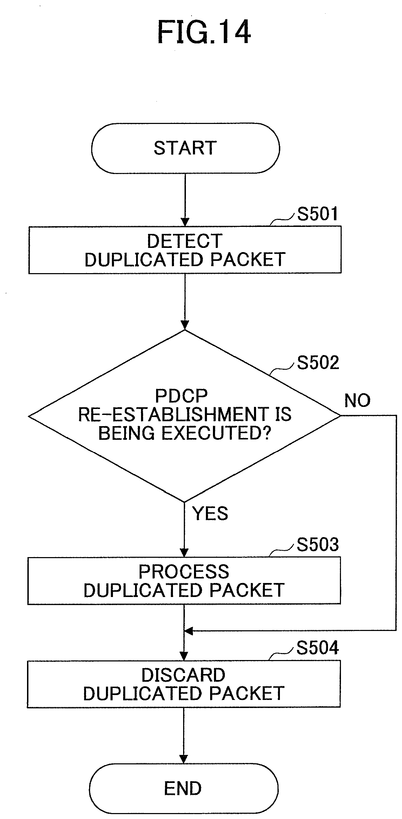

Fig. 14 shows an example of a process flow executed by the user apparatus UE having the above-mentioned configuration. As a prerequisite for the process flow shown in Fig. 14, it is assumed that split bearer is configured by the RRC processing unit 105 of the user apparatus UE.

In step 501, the duplicated packet processing unit 103 detects a duplicated packet (PDCP PDU). The step 501 may correspond to a case where a duplicated packet is detected after expiration of a reordering timer when PDCP re-establishment is not being performed as shown in Fig. 8, for example, or may correspond to a case where a duplicated packet is detected while PDCP re-establishment is being performed due to HO as shown in Fig. 10, for example. Also, it may correspond to a case where PDCP re-establishment associated with HO is being executed and a duplicated packet is detected after expiration of the reordering timer.

When the duplicated packet processing unit 103 detects the duplicated packet, the duplicated packet processing unit 103 determines whether PDCP re-establishment is being executed in the user apparatus UE (step 502). When PDCP re-establishment is being executed (Yes in step 502), the duplicated packet is processed in step 503 (deciphering and ROHC decompression processing are performed), so that the duplicated packet is discarded (step 504).

On the other hand, when PDCP re-establishment is not being executed (when it is not determined that PDCP re-establishment is being executed) (No in step 502), the duplicated packet is discarded without processing (step 504). In the present embodiment, "PDCP re-establishment is being executed" includes a case where PDCP re-establishment was executed in the past and a packet after PDCP re-establishment starts to be received, or the like.

The configuration of the user apparatus UE shown in Fig. 13 may be realized by hardware circuits (example: one or a plurality of IC chips) as a whole, or may be realized by hardware circuits for a part and by a CPU and a program for other parts.

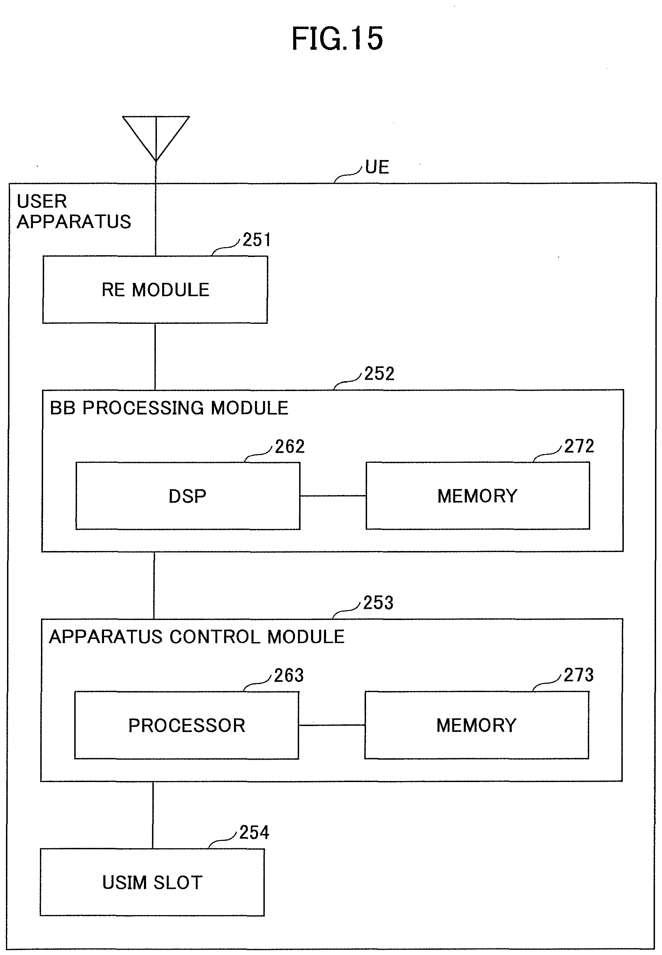

Fig. 15 is a diagram showing an example of a hardware (HW) configuration of the user apparatus UE. Fig. 15 shows a configuration closer to an implementation example than that of Fig. 13. As shown in Fig. 15, the UE includes an RE (Radio Equipment) module 251 for performing processing on radio signals, a BB (Base Band) processing module 252 for performing baseband signal processing, an apparatus control module 253 for performing processes of upper layer and the like, and a USIM slot 254 that is an interface for accessing a USIM card.

The RE module 251 generates a radio signal that should be transmitted from an antenna by performing D/A (Digital-to-Analog) conversion, modulation, frequency conversion, and power amplifying and the like on a digital baseband signal received from the BB processing module 252. Also, the RE module 251 generates a digital baseband signal by performing frequency conversion, A/D (Analog to Digital) conversion, demodulation and the like on a received radio signal, to pass the signal to the BB processing module 252. The RE module 251 includes, for example, functions of physical layer and the like of the UL signal transmission unit 102 and the DL signal reception unit 101.

The BB processing module 252 performs processing for converting between IP packets and digital baseband signals. The DSP (Digital Signal Processor) 262 is a processor for performing signal processing in the BB processing module 252. The memory 272 is used as a work area of the DSP 262. The BB processing module 252 may include, for example, functions of layer 2 and the like of the UL signal transmission unit 102 and the DL signal reception unit 101, and, include the duplicated packet processing unit 103, the ROHC management unit 104 and the RRC processing unit 105. By the way, all of or a part of the duplicated packet processing unit 103, the ROHC management unit 104 and the RRC processing unit 105 may be included in the apparatus control module 253.

The apparatus control module 253 performs protocol processing of IP layer, processing of various applications, and the like. The processor 263 is a processor for performing processes performed by the apparatus control module 253. The memory 273 is used as a work area of the processor 263. The processor 263 performs read and write of data with a USIM via the USIM slot 254.

The configuration of the base station eNB that operates as an MeNB or an SeNB may be realized by hardware circuits (example: one or a plurality of IC chips) as a whole, or may be realized by hardware circuits for a part and by a CPU and a program for other parts.

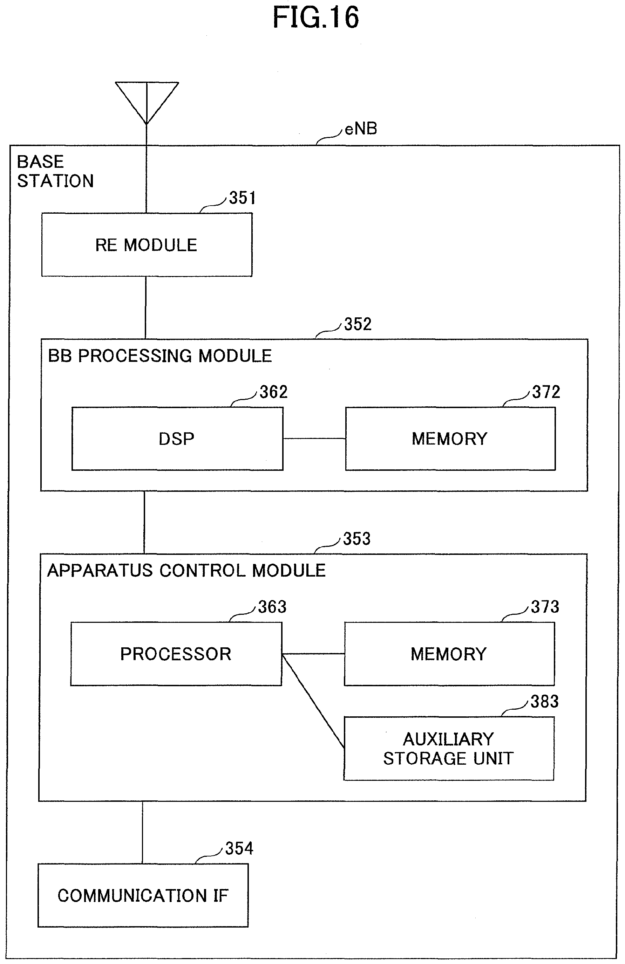

Fig. 16 is a diagram showing an example of a hardware (HW) configuration of the base station eNB. As shown in Fig. 16, the base station eNB includes an RE module 351 for performing processing on radio signals, a BB processing module 352 for performing baseband signal processing, an apparatus control module 353 for perming processes of upper layer and the like, and a communication IF 354 that is an interface for connecting to a network.

The RE module 351 generates a radio signal that should be transmitted from an antenna by performing D/A conversion, modulation, frequency conversion, and power amplifying and the like on a digital baseband signal received form the BB processing module 352. Also, the RE module 351 generates a digital baseband signal by performing frequency conversion, A/D conversion, demodulation and the like on a received radio signal, to pass the signal to the BB processing module 352.

The BB processing module 352 performs processing for converting between IP packets and digital baseband signals. The DSP 362 is a processor for performing signal processing in the BB processing module 352. The memory 372 is used as a work area of the DSP 352.

The apparatus control module 353 performs protocol processing of IP layer, OAM processing, and the like. The processor 363 is a processor for performing processes performed by the apparatus control module 353. The memory 373 is used as a work area of the processor 363. The auxiliary storage device 383 is, for example, an HDD and the like, and stores various setting information and the like for operation of the base station eNB.

As described above, according to the present embodiment, there is provided a user apparatus in a mobile communication system in which packets of a bearer are distributed among a plurality of base stations, and the distributed packets of the bearer are transmitted from the plurality of base stations to the user apparatus, including:
a reception unit configured to sequentially receive packets of the bearer from the plurality of base stations; and
a duplicated packet processing unit configured,
when detecting a duplicated packet, from packets received by the reception unit, which is a duplicate of a packet, to determine whether re-establishment of a predetermined packet communication protocol including a header compression and decompression protocol is being performed in the user apparatus, and,
when re-establishment of the predetermined packet communication protocol is not being performed, to discard the duplicated packet without performing header decompression processing of the duplicated packet.

According to the above-mentioned configuration, it becomes possible to properly perform processing of a duplicated packet, when a user apparatus receives the duplicated packet, in consideration of packet decompression processing after that, in a mobile communication system in which packets of a bearer are distributed among a plurality of base stations, and the distributed packets of the bearer are transmitted to the user apparatus from the plurality of base stations.

When re-establishment of the predetermined packet communication protocol is being performed, the duplicated packet processing unit discards the duplicated packet after performing header restoration processing of the duplicated packet. According to this configuration, since header restoration processing of the duplicated packet can be performed in HO or reconnection, for example, new information (example: ROHC information) for header restoration can be obtained.

When the reception unit detects that there is missing in packets of the bearer that are sequentially received from the plurality of base stations, the reception unit starts a timer and waits for reception of the mission packet until the timer expires, and when the reception unit receives the missing packet after the timer expires, the duplicated packet processing unit may determine that the missing packet received after expiration of the timer to be the duplicated packet, and discard the duplicated packet without performing header decompression processing of the duplicated packet. According to this configuration, for example, in a case where HO or reconnection is not performed, it can be avoided that old information (example: ROHC information) for header restoration is obtained so that update is performed by using the old information.

Dual connectivity is configured between the user apparatus and the plurality of base stations, and the duplicated packet processing unit may determine that re-establishment of the predetermined packet communication protocol is being performed based on a configuration change instruction in the dual connectivity. According to this configuration, it can be properly determined whether re-establishment of the predetermined packet communication protocol is being performed.

When change of MeNB or change of SeNB in the dual connectivity is performed, the duplicated packet processing unit may determine that re-establishment of the predetermined packet communication protocol is being performed. According to this configuration, it can be properly determined whether re-establishment of the predetermined packet communication protocol is being performed.

The predetermined packet communication protocol is PDCP, for example. Accordingly, When detecting duplication of PDCP PDU, it can be avoided to perform updating by using old ROHC information.

The user apparatus UE described in the present embodiment may include a CPU and a memory and may be realized by executing a program by the CPU (processor), or may be realized by hardware such as hardware circuits including logics of processing described in the present embodiment, or may be configured by coexistence of a program and hardware.

In the above, the embodiment of the present invention has been explained. However, the disclosed invention is not limited to the embodiment. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE has been explained by using functional block diagrams. However, such an apparatus may be implemented in hardware, software, or a combination thereof.

The software that operates by a processor provided in the user apparatus UE according to an embodiment of the present invention may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

### DESCRIPTION OF REFERENCE SIGNS

- MeNB, SeNB: base station
- UE: user apparatus
- 10: S-GW
- 101: DL signal reception unit
- 102: UL signal transmission unit
- 103: duplicated packet processing unit
- 104: ROHC management unit
- 105: RRC processing unit
- 251: RE module
- 252: BB processing module
- 253: apparatus control module
- 254: USIM slot
- 351: RE module
- 352: BB processing module
- 353: apparatus control module
- 354: communication IF

## Claims

1. A user apparatus for use in a mobile communication system in which packets of a bearer are distributed among a plurality of base stations, and the distributed packets of the bearer are transmitted from the plurality of base stations to the user apparatus, wherein dual connectivity is configured between the user apparatus and the plurality of base stations, the plurality of base stations including a MeNB and a SeNB;
the user apparatus comprising:
a reception unit configured to sequentially receive packets of the bearer from the plurality of base stations; and
a duplicated packet processing unit configured,
when detecting a duplicated packet, from packets received by the reception unit, which is a duplicate of a packet, to determine whether re-establishment of a predetermined packet communication protocol including a header compression and decompression protocol is being performed in the user apparatus by determining whether change of SeNB is performed, and,
when it is determined that re-establishment of the predetermined packet communication protocol is not being performed, to discard the duplicated packet without performing header decompression processing of the duplicated packet.

2. The user apparatus as claimed in claim 1, wherein, when it is determined that re-establishment of the predetermined packet communication protocol is being performed, the duplicated packet processing unit discards the duplicated packet after performing header restoration processing of the duplicated packet.

3. The user apparatus as claimed in claim 1 or 2, wherein, when the reception unit detects that there is missing in packets of the bearer that are sequentially received from the plurality of base stations, the reception unit starts a timer and waits for reception of the missing packet until the timer expires, and
when the reception unit receives the missing packet after the timer expires, the duplicated packet processing unit determines that the missing packet received after expiration of the timer to be the duplicated packet, and discards the duplicated packet without performing header decompression processing of the duplicated packet.

4. The user apparatus as claimed in any one of claims 1-3, wherein the duplicated packet processing unit determines that re-establishment of the predetermined packet communication protocol is being performed based on a configuration change instruction in the dual connectivity.

5. The user apparatus as claimed in claim 4, wherein, when change of SeNB in the dual connectivity is performed, the duplicated packet processing unit determines that re-establishment of the predetermined packet communication protocol is being performed.

6. The user apparatus as claimed in any one of claims 1-5, wherein the predetermined packet communication protocol is Packet Data Convergence Protocol, PDCP.

7. A duplicated packet processing method executed by a user apparatus in a mobile communication system in which packets of a bearer are distributed among a plurality of base stations, and the distributed packets of the bearer are transmitted from the plurality of base stations to the user apparatus, wherein dual connectivity is configured between the user apparatus and the plurality of base stations, the plurality of base stations including a MeNB and a SeNB;
the duplicated packet processing method comprising:
a reception step of sequentially receiving packets of the bearer from the plurality of base stations; and
a duplicated packet processing step of,
when detecting a duplicated packet, from packets received by the reception step, which is a duplicate of a packet, determining whether re-establishment of a predetermined packet communication protocol including a header compression and decompression protocol is being performed in the user apparatus by determining whether change of SeNB is performed, and,
when it is determined that re-establishment of the predetermined packet communication protocol is not being performed, discarding the duplicated packet without performing header decompression processing of the duplicated packet.

## Patentansprüche

1. Anwendervorrichtung zur Verwendung in einem Mobilkommunikationssystem, in dem Pakete eines Trägers unter einer Vielzahl von Basisstationen verteilt sind und die verteilten Pakete des Trägers von der Vielzahl von Basisstationen zur Anwendervorrichtung gesendet werden, wobei eine Dualkonnektivität zwischen der Anwendervorrichtung und der Vielzahl von Basisstationen konfiguriert ist, wobei die Vielzahl von Basisstationen eine MeNB und eine SeNB einschließt;
wobei die Anwendervorrichtung umfasst:
eine Empfangseinheit, die konfiguriert ist, aufeinanderfolgend Pakete des Trägers von der Vielzahl von Basisstationen zu empfangen; und
eine duplizierte Paketverarbeitungseinheit, die konfiguriert ist zum
Ermitteln, wenn ein dupliziertes Paket von Paketen, die durch die Empfangseinheit empfangen werden, erfasst wird, das ein Duplikat eines Pakets ist, ob eine Neueinrichtung eines vorbestimmten Paketkommunikationsprotokolls, enthaltend ein Headerkomprimierungs- und Dekomprimierungsprotokoll, in der Anwendervorrichtung durchgeführt wird, indem ermittelt wird, ob ein SeNB-Wechsel durchgeführt wird, und
Verwerfen des duplizierten Pakets ohne Durchführung einer Headerdekomprimierungsverarbeitung des duplizierten Pakets, wenn ermittelt wird, dass eine Neueinrichtung des vorbestimmten Paketkommunikationsprotokolls nicht durchgeführt wird.

2. Anwendervorrichtung nach Anspruch 1, wobei, wenn ermittelt wird, dass eine Neueinrichtung des vorbestimmten Paketkommunikationsprotokolls durchgeführt wird, die duplizierte Paketverarbeitungseinheit das duplizierte Paket nach Durchführung einer Headerwiederherstellungsverarbeitung des duplizierten Pakets verwirft.

3. Anwendervorrichtung nach Anspruch 1 oder 2, wobei, wenn die Empfangseinheit erfasst, dass in Paketen des Trägers, die aufeinanderfolgend von der Vielzahl von Basisstationen empfangen werden, etwas fehlt, die Empfangseinheit einen Zeitgeber startet und auf einen Empfang des fehlenden Pakets wartet, bis der Zeitgeber abläuft, und
wenn die Empfangseinheit das fehlende Paket empfängt, nachdem der Zeitgeber abgelaufen ist, die duplizierte Paketverarbeitungseinheit ermittelt, dass das nach Ablauf des Zeitgebers empfangene fehlende Paket das duplizierte Paket ist, und das duplizierte Paket ohne Durchführung einer Headerdekomprimierungsverarbeitung des duplizierten Pakets verwirft.

4. Anwendervorrichtung nach einem der Ansprüche 1 bis 3, wobei die duplizierte Paketverarbeitungseinheit basierend auf einer Konfigurationsänderungsanweisung in der Dualkonnektivität ermittelt, dass eine Neueinrichtung des vorbestimmten Kommunikationsprotokolls durchgeführt wird.

5. Anwendervorrichtung nach Anspruch 4, wobei, wenn ein SeNB-Wechsel in der Dualkonnektivität durchgeführt wird, die duplizierte Verarbeitungseinheit ermittelt, dass eine Neueinrichtung des vorbestimmten Paketkommunikationsprotokolls durchgeführt wird.

6. Anwendervorrichtung nach einem der Ansprüche 1 bis 5, wobei das vorbestimmte Paketkommunikationsprotokoll ein Paketdatenkonvergenzprotokoll, PDCP, ist.

7. Dupliziertes Paketverarbeitungsverfahren, das durch eine Anwendervorrichtung in einem Mobilkommunikationssystem ausgeführt wird, in dem Pakete eines Trägers unter einer Vielzahl von Basisstationen verteilt sind und die verteilten Pakete des Trägers von der Vielzahl von Basisstationen an die Anwendervorrichtung gesendet werden, wobei eine Dualkonnektivität zwischen der Anwendervorrichtung und der Vielzahl von Basisstationen konfiguriert ist, wobei die Vielzahl von Basisstationen eine MeNB und eine SeNB einschließt;
wobei das duplizierte Paketverarbeitungsverfahren umfasst:
einen Empfangsschritt zum aufeinanderfolgendem Empfangen von Paketen des Trägers von der Vielzahl von Basisstationen; und
einen duplizierten Paketverarbeitungsschritt zum
Ermitteln, wenn ein dupliziertes Paket von Paketen, die durch den Empfangsschritt empfangen werden, erfasst wird, das ein Duplikat eines Pakets ist,, ob eine Neueinrichtung eines vorbestimmten Paketkommunikationsprotokolls, enthaltend ein Headerkomprimierungs- und Dekomprimierungsprotokoll, in der Anwendervorrichtung durchgeführt wird, indem ermittelt wird, ob ein SeNB-Wechsel durchgeführt wird, und
Verwerfen des duplizierten Pakets ohne Durchführung einer Headerdekomprimierungsverarbeitung des duplizierten Pakets, wenn ermittelt wird, dass eine Neueinrichtung des vorbestimmten Paketkommunikationsprotokolls nicht durchgeführt wird.

## Revendications

1. Dispositif d'utilisateur destiné à être utilisé dans un système de communication mobile dans lequel des paquets d'un support sont répartis entre une pluralité de stations de base, et les paquets répartis du support sont transmis depuis la pluralité de stations de base au dispositif d'utilisateur, dans lequel une double connectivité est configurée entre le dispositif d'utilisateur et la pluralité de stations de base, la pluralité de stations de base comportant une station MeNB et une station SeNB ;
le dispositif d'utilisateur comprenant :
une unité de réception configurée pour recevoir séquentiellement des paquets du support provenant de la pluralité de stations de base ; et
une unité de traitement de paquets en double configurée,
lors de la détection, parmi les paquets reçus par l'unité de réception, d'un paquet en double qui est un double d'un paquet, pour déterminer si le rétablissement d'un protocole prédéterminé de communication par paquets comportant un protocole de compression et de décompression d'en-tête est effectué dans le dispositif d'utilisateur en déterminant si un changement de SeNB est effectué, et,
lorsqu'il est déterminé que le rétablissement du protocole prédéterminé de communication par paquets n'est pas effectué, pour éliminer le paquet en double sans effectuer de traitement de décompression d'en-tête du paquet en double.

2. Dispositif d'utilisateur selon la revendication 1, dans lequel, lorsqu'il est déterminé que le rétablissement du protocole prédéterminé de communication par paquets est effectué, l'unité de traitement de paquets en double élimine le paquet en double après avoir effectué un traitement de restauration d'en-tête du paquet en double.

3. Dispositif d'utilisateur selon les revendications 1 ou 2, dans lequel, lorsque l'unité de réception détecte qu'il manque un paquet dans les paquets du support qui sont reçus séquentiellement de la pluralité de stations de base, l'unité de réception démarre une minuterie et attend la réception du paquet manquant jusqu'à ce que la minuterie arrive à expiration, et
lorsque l'unité de réception reçoit le paquet manquant après que la minuterie est arrivée à expiration, l'unité de traitement de paquets en double détermine que le paquet manquant reçu après expiration de la minuterie est le paquet en double, et élimine le paquet en double sans effectuer de traitement de décompression d'en-tête du paquet en double.

4. Dispositif d'utilisateur selon l'une quelconque des revendications 1 à 3, dans lequel l'unité de traitement de paquets en double détermine que le rétablissement du protocole prédéterminé de communication par paquets est effectué sur la base d'une instruction de changement de configuration dans la double connectivité.

5. Dispositif d'utilisateur selon la revendication 4, dans lequel, lorsqu'un changement de SeNB dans la double connectivité est effectué, l'unité de traitement de paquets en double détermine que le rétablissement du protocole prédéterminé de communication par paquets est effectué.

6. Dispositif d'utilisateur selon l'une quelconque des revendications 1 à 5, dans lequel le protocole prédéterminé de communication par paquets est un protocole de convergence des données par paquets, PDCP.

7. Procédé de traitement de paquets en double exécuté par un dispositif d'utilisateur dans un système de communication mobile dans lequel des paquets d'un support sont répartis entre une pluralité de stations de base, et les paquets répartis du support sont transmis depuis la pluralité de stations de base au dispositif d'utilisateur, dans lequel une double connectivité est configurée entre le dispositif d'utilisateur et la pluralité de stations de base, la pluralité de stations de base comportant une station MeNB et une station SeNB ;
le procédé de traitement de paquets en double comprenant :
une étape de réception consistant à recevoir séquentiellement des paquets du support provenant de la pluralité de stations de base ; et
une étape de traitement de paquets en double consistant,
lors de la détection, parmi les paquets reçus lors de l'étape de réception, d'un paquet en double qui est un double d'un paquet, à déterminer si le rétablissement d'un protocole prédéterminé de communication par paquets comportant un protocole de compression et de décompression d'en-tête est effectué dans le dispositif d'utilisateur en déterminant si un changement de SeNB est effectué, et,
lorsqu'il est déterminé que le rétablissement du protocole prédéterminé de communication par paquets n'est pas effectué, à éliminer le paquet en double sans effectuer de traitement de décompression d'en-tête du paquet en double.
